# EUROPEAN PATENT SPECIFICATION

(11) **EP 2 272 707 B1**
(45) Date of publication and mention of the grant of the patent: **02.10.2019**
(21) Application number: 10169163.2
(22) Date of filing: 09.07.2010
(51) Int. Cl.: B60N 2/225

(54) **Seat reclining apparatus for vehicle**
Neigungverstellvorrichtung eines Fahrzeugsitzes
Appareil de réglage d'inclinaison de siège pour véhicule

(30) Priority: 10.07.2009 JP 2009163872
(43) Date of publication of application: 12.01.2011
(73) Proprietor: AISIN SEIKI KABUSHIKI KAISHA, Kariya-shi, Aichi-ken 448-8650 (JP)
(72) Inventor: Ito, Sadao, Kariya-shi Aichi-ken 448-8650 (JP)
(74) Representative: Intès, Didier Gérard André

(56) References cited:
- WO-A1-2006/136275
- DE-A1-102008 019 120

## Description

### TECHNICAL FIELD

This disclosure relates to a seat reclining apparatus for a vehicle, tilting a seat back relative to a seat cushion.

### BACKGROUND DISCUSSION

A known seat reclining apparatus for a vehicle disclosed in JP2008-543456A (hereinafter referred to as Reference 1) and DE 10 2008 019 120 A1 (Reference 2) includes a stepless adjustment (Taumel mechanism) in which an engagement between internal and external gears having a different number of teeth from each other is utilized. Such seat reclining apparatus includes a torsion spring arranged between driving-side and driven-side members. The driving-side member moves an engagement position between the internal and external gears. When an external load (for example, a load or vibrations applied to a seat back) acts on the driven-side member, the driven-side member may be rotated by the external load. In such case, the torsion spring frictionally engages with the driven-side member and thereby restricts the driven-side member from being rotated by the external load. The driven-side members are, for example, first and second attaching members having the external and internal gears, respectively.

In other words, the seat reclining apparatus according to Reference 1 includes the torsion spring serving as a wrap spring brake and regulated by a driving member and wedge members. When the external load acts on the seat back, an outer circumferential surface of the torsion spring makes a frictional contact with an inner circumferential surface of a spring bush fixed to the external gear of the second attaching member. Accordingly, the aforementioned driven-side member is prevented from being rotated by the external load. Meanwhile, the seat reclining apparatus according to Reference 2 includes the torsion spring similar to that of Reference 1. When the external load acts on the seat back, the outer circumferential surface of the torsion spring makes a frictional contact with an inner circumferential surface of a bearing arranged in the center of the internal gear and provided coaxially therewith, thereby preventing the aforementioned rotation of the driven-side member by the external load.

According to the seat reclining apparatus described in Reference 1, the spring bush and the torsion spring are arranged at an outer circumferential side of an omega-shaped spring in order to prevent the spring bush and the torsion spring from interfering with the omega-shaped spring. The omega-shaped spring expands a space between the wedge members. A large external diameter of the torsion spring is necessary because of the aforementioned arrangement of the spring bush and the torsion spring; therefore, a large operating force is required for adjusting a tilt angle of the seat back. Further, the omega-shaped spring needs spring characteristics such as a force for expanding the space between the wedge members and a force for stabilizing the expanding force (i.e. a spring constant of the omega-shaped spring must be small) and therefore needs some free length. However, an external diameter of the omega-shaped spring may not be enlarged. Accordingly, the omega-shaped spring is double wound in a complicated manner in order to secure the free length.

According to the seat reclining apparatus described in Reference 2, it is necessary to arrange the torsion spring within the bearing to therefore minimize the size of the torsion spring. As a result, it is difficult to secure the frictional engagement force (braking force) required to prevent the driven-side member from being rotated by the external load.

A need thus exists for a seat reclining apparatus for a vehicle, which appropriately secures a frictional engagement force required to prevent a driven-side member from being rotated by an external load, which is not applied from a driving-side member, without increasing a required operating force.

### SUMMARY

The seat reclining apparatus according to the invention comprises the features of claim 1.

According to an aspect of this disclosure, a seat reclining apparatus for a vehicle includes a first plate adapted to be attached to one of a seat cushion and a seat back and including an internal gear, a second plate adapted to be attached to the other of the seat cushion and the seat back and including an external gear having fewer teeth than the internal gear and engaging with the internal gear, a pair of wedge members arranged between the first plate and the second plate, biased in a direction in which the eccentricity between the internal gear and the external gear increases, and retaining an engagement position between the internal gear and the external gear, and a driving cam arranged to be relatively rotatable with respect to the first plate, including a cam portion, wherein the engagement position between the internal gear and the external gear can be shifted by the cam portion pressing the pair of wedge members so that the wedge members are integrally rotated with the cam portion when the driving cam is rotatably operated, wherein each of the wedge members includes a retaining portion and a pressed portion that are integrally formed with each other, the retaining portion being provided in a position axially overlapping the internal gear and the external gear and retaining the engagement position between the internal gear and the external gear, the pressed portion being axially offset from the retaining portion and pressed by the cam portion. The seat reclining apparatus further includes a protruding column portion provided in the center of the first plate in a protruding manner and positioned coaxially with the internal gear, and a torsion spring having a coil portion disposed in a position axially overlapping the pressed portions and attached around an outer circumferential surface of the protruding column portion, the torsion spring including both ends, each of the ends being circumferentially adjacent to the cam portion and the pressed portion and disposed therebetween, the torsion spring being elastically deformed to reduce a frictional engagement between the coil portion and the protruding column portion when the cam portion presses the pressed portion via the end, the torsion spring being elastically deformed to increase the frictional engagement between the coil portion and the protruding column portion when the pressed portion presses the end.

According to the configuration described above, the coil portion of the torsion spring attached around the outer circumferential surface of the protruding column portion is provided in the position axially overlapping the pressed portion of the wedge member. The pressed portion is axially offset from the retaining portion. An external diameter of the coil portion may be set regardless of the size of the retaining portion. Accordingly, the size of the torsion spring (coil portion) is appropriately determined to thereby surely obtain a frictional engagement force (braking force) required to prevent the second plate from being rotated by an external load or vibrations applied to the seat back from a rearward direction of the seat back. Further, when the coil portion is attached around the outer circumferential surface of the protruding column portion, the frictional engagement between the coil portion and the protruding column portion is established between an inner surface of the coil portion and the outer circumferential surface of the protruding column portion. Accordingly, the external diameter of the coil portion is minimized. Thus, an operating force (rotational operating force) of the driving cam (operating handle), required to adjust a tilt angle of the seat back while the torsion spring is elastically deformed, may be reduced. Accordingly, the size of the external diameter of the coil portion is minimized, resulting in a cost reduction.

According to another aspect of the disclosure, the seat reclining apparatus further includes an intermediate member having a pair of intermediate transmitting portions, each of the intermediate transmitting portions being circumferentially adjacent to the end and the pressed portion and disposed therebetween, the intermediate transmitting portion receiving a pressing force of the cam portion via the end and transmitting the pressing force to the pressed portion, the intermediate transmitting portion receiving a pressing force of the pressed portion and transmitting the pressing force to the end.

Accordingly, the engagement frictional force (braking force) by the torsion spring (coil portion) is regulated by the intermediate member (intermediate transmitting portions). Accordingly, for example, in the case where the driving cam is rotationally driven by a motor including a speed reduction mechanism, the braking force by the torsion spring may be replaced by a braking function of the speed reduction mechanism by simply excluding the intermediate member and the torsion spring. Consequently, it is not necessary to modify a shape of the wedge member in order to connect the driving cam to the motor, therefore expanding the versatility of the wedge member.

According to a further aspect of the disclosure, the pair of wedge members is biased by a retaining spring so that the eccentricity between the internal gear and the external gear increases, the retaining spring being arranged around an outer circumferential surface of the cam portion and outer circumferential surfaces of the pressed portions and including both ends that extend in parallel with axes of the internal gear and the external gear and that are locked to the wedge members, respectively.

Accordingly, an external diameter, i.e. a free length of the retaining spring 28 may be surely secured regardless of the size of the retaining portion. Accordingly, it is not necessary for the retaining spring to be double wound in a complicated manner to secure the free length so that the retaining spring obtains a biasing force for increasing the eccentricity between the internal gear and the external gear (for expanding a space between the wedge members) and stabilizes the biasing force. As a result, manufacturing hours and costs may be reduced.

According to still another aspect of the disclosure, the ends of the torsion spring extend in a radially outward direction of the coil portion.

Further, the protruding column portion is a separate member from the first plate; therefore, the first plate may be axially aligned in an appropriate manner and a center alignment of the protruding column portion may be precisely achieved.

Furthermore, the protruding column portion frictionally engaging with the coil portion of the torsion spring has a rigid configuration (formed in a cylindrical shape) continuously and entirely circumferentially extending and not having notches and the like to be connected to other members. Accordingly, the protruding column portion is not deformed by an external force due to the connection between the protruding column portion and the other members. As a result, a high and precise roundness of the protruding column portion may be maintained and the frictional engagement between the coil portion and the protruding column portion may be appropriately established.

In addition, the pressed portion of the wedge member is directly pressed by the end of the torsion spring pressed by the cam portion of the driving cam. Accordingly, the number of applicable components and costs of the seat reclining apparatus may be further reduced compared to a case where an intermediate member transmitting a pressing force among the wedge member, the torsion spring, and the driving cam are applied to the seat reclining apparatus.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a lateral view of a seat to which a seat reclining apparatus for a vehicle according to a first embodiment disclosed here is applied;
Fig. 2 is a cross-sectional view of the seat reclining apparatus in a width direction of the seat according to the first embodiment disclosed here;
Fig. 3 is a lateral view of the seat reclining apparatus according to the first embodiment disclosed here;
Fig. 4 is a cross-sectional view taken along the line IV-IV of Fig. 3;
Fig. 5 is an exploded perspective view of the seat reclining apparatus according to the first embodiment disclosed here;
Fig. 6A is a cross-sectional view illustrating an operation of the seat reclining apparatus according to the first embodiment disclosed here;
Fig. 6B is a cross-sectional view illustrating the operation of the seat reclining apparatus according to the first embodiment disclosed here;
Fig. 6C is a cross-sectional view illustrating the operation of the seat reclining apparatus according to the first embodiment disclosed here;
Fig. 6D is a cross-sectional view illustrating the operation of the seat reclining apparatus according to the first embodiment disclosed here;
Fig. 6E is a cross-sectional view illustrating the operation of the seat reclining apparatus according to the first embodiment disclosed here;
Fig. 6F is a cross-sectional view illustrating the operation of the seat reclining apparatus according to the first embodiment disclosed here;
Fig. 7 is a lateral view of the seat reclining apparatus according to a second embodiment disclosed here;
Fig. 8 is a cross-sectional view taken along the line VIII-VIII of Fig. 7;
Fig. 9 is an exploded perspective view of the seat reclining apparatus according to the second embodiment disclosed here;
Fig. 10A is a cross-sectional view illustrating an operation of the seat reclining apparatus according to the second embodiment disclosed here;
Fig. 10B is a cross-sectional view illustrating the operation of the seat reclining apparatus according to the second embodiment disclosed here;
Fig. 10C is a cross-sectional view illustrating the operation of the seat reclining apparatus according to the second embodiment disclosed here;
Fig. 10D is a cross-sectional view illustrating the operation of the seat reclining apparatus according to the second embodiment disclosed here;
Fig. 10E is a cross-sectional view illustrating the operation of the seat reclining apparatus according to the second embodiment disclosed here; and
Fig. 10F is a cross-sectional view illustrating the operation of the seat reclining apparatus according to the second embodiment disclosed here.

### DETAILED DESCRIPTION

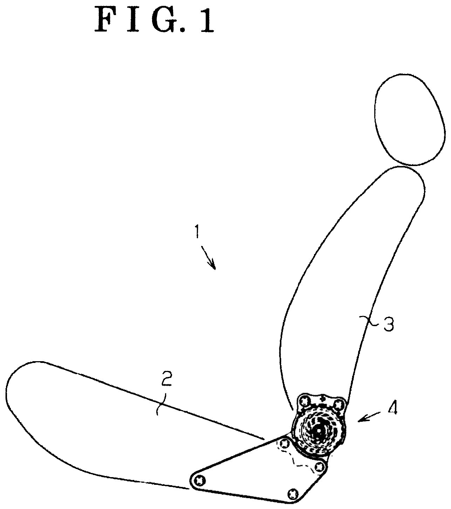

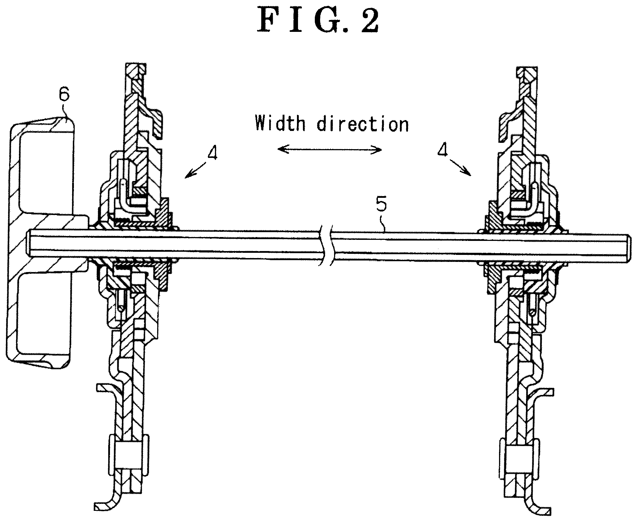

A seat reclining apparatus 4 for a vehicle, according to a first embodiment will be explained with reference to illustrations of drawings as follows. Fig. 1 is a lateral view of a seat 1 for the vehicle to which the seat reclining apparatus 4 is applied. As illustrated in Fig. 1, the seat 1 includes a seat cushion 2 configuring a seat surface of the seat 1. A seat back 3 configuring a seat back portion is rotatably connected to a rear end of the seat cushion 2 via the seat reclining apparatus 4 so as to tilt relative to the seat cushion 2. As illustrated in a cross-sectional view of Fig. 2, a pair of seat reclining apparatuses 4 is arranged at both sides of the seat 1 in a width direction thereof. The pair of seat reclining apparatuses 4 is connected to each other by a connecting shaft 5 extending in the width direction and thereby is operated in synchronization with each other. The connecting shaft 5 is formed by a metallic bar having an approximately hexagonal shape. An operating handle 6 for inputting an operating force to rotationally drive the connecting shaft 5 is connected to one of the sides of the seat 1 (to the left side in Fig. 2) so as to integrally rotate with the connecting shaft 5.

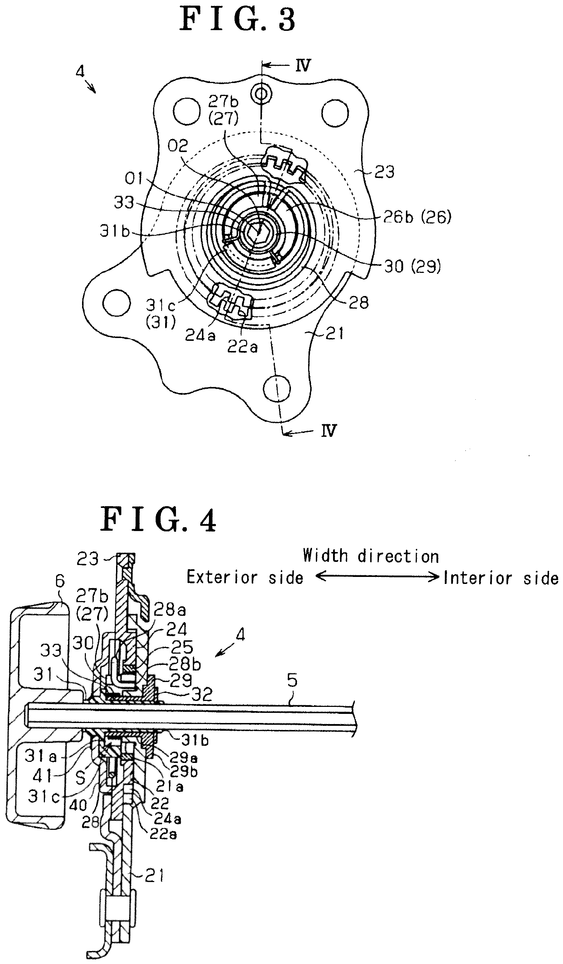

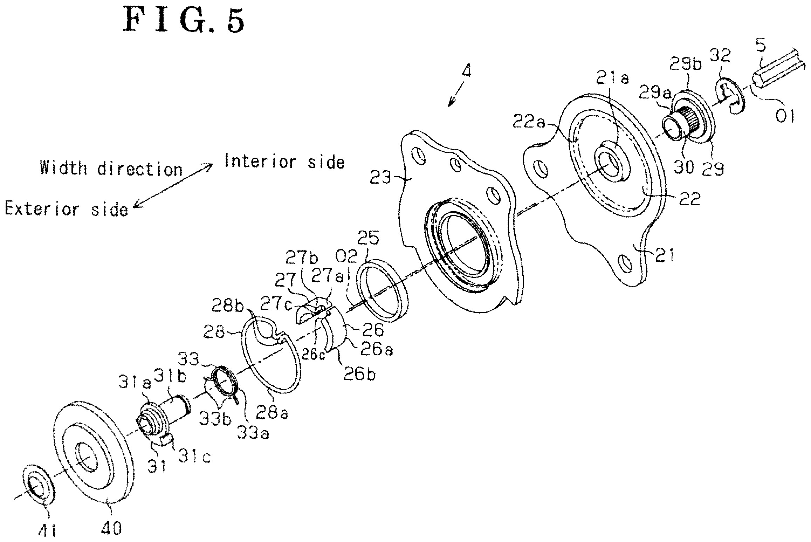

Fig. 3 is a lateral view of the seat reclining apparatus 4 seen from an exterior side of the seat 1 in the width direction. Fig. 4 is a cross-sectional view taken along the line IV-IV of Fig. 3. Fig. 5 is an exploded perspective view of the seat reclining apparatus 4.

As shown in Figs. 3 to 5, the seat reclining apparatus 4 includes a lower plate 21 serving as a first plate fixed to a side face of a frame (seat cushion frame) of the seat cushion 2 in the width direction of the seat 1. The lower plate 21 is positioned at a further interior side of the seat 1 in the width direction than an upper plate 23, which will be described below. The lower plate 21 is formed by a half blanking process from a metallic plate. The lower plate 21 and the upper plate 23 correspond to driven-side members driven by a driving-side member such as a driving cam 31 that will be described below. The lower plate 21 includes a recessed portion 22 formed into a circular shape and recessed from the exterior side toward the interior side in the width direction. An internal gear 22a is formed at the recessed portion 22. Further, a boss portion 21a having a cylindrical shape is formed in the center of the recessed portion 22 so as to be coaxially therewith and to protrude toward the exterior side of the seat 1. The boss portion 21a is formed by a burring process.

The seat reclining apparatus 4 further includes the upper plate 23 serving as a second plate fixed to a side face of a frame (seat back frame) of the seat back 3. The upper plate 23 is formed by a half blanking process from a metallic plate. An annular portion 24 is formed in the upper plate 23 so as to protrude toward the interior side (toward the lower plate 21) of the seat 1 in the width direction. The annular portion 24 has an external diameter smaller than an internal diameter of the recessed portion 22. An external gear 24a is formed at the annular portion 24. A bush 25 formed in an annular shape and having approximately the same external diameter as an internal diameter of the annular portion 24 is press-fitted to the annular portion 24 so as to be fixed thereto. An internal diameter of the bush 25 is larger than an external diameter of the boss portion 21a.

Here, the number of teeth of the internal gear 22a is more than the number of teeth of the external gear 24a by a predetermined number of teeth (one tooth). A profile of the teeth of the internal gear 22a is configured so as to engage with the external gear 24a. When the internal gear 22a is engaged with the external gear 24a as illustrated in Fig. 3, a central axis O1 (axis) of the internal gear 22a and a central axis 02 (axis) of the external gear 24a deviate from each other. Accordingly, an angular position where an eccentric engagement is established between the internal gear 22a and the external gear 24a (the angular position is hereinafter referred to as an engagement position) gradually shifts in a circumferential direction of the lower and upper plates 21 and 23 as the connecting shaft 5 rotates 360 degrees. At this time, the upper plate 23 rotates relative to the lower plate 21 by an angle corresponding to a difference between the teeth of the external gear 24a and the teeth of the internal gear 22a.

In the condition where the internal gear 22a and the external gear 24a are engaged with each other, the bush 25 is provided in a position axially overlapping the boss portion 21a (see Fig. 4). Further, an accommodating space having an approximately annular shape is formed between an inner circumferential surface of the bush 25 and an outer circumferential surface of the boss portion 21a by the eccentric engagement between the internal gear 22a and the external gear 24a. A pair of wedge members 26 and 27 is arranged in the accommodating space. The pair of wedge members 26 and 27 is configured as two symmetric portions circumferentially divided at the engagement position between the internal gear 22a and the external gear 24a and at an angular position that is circumferentially opposite from the engagement position.

The wedge members 26 and 27 are formed into approximately symmetric arc shapes conforming to a shape of the accommodating space formed between the inner circumferential surface of the bush 25 and the outer circumferential surface of the boss portion 21a. A radial thickness of each of the wedge members 26 and 27 increases toward an upper end of each wedge member 26, 27, which is located in the vicinity of the engagement position between the internal gear 22a and the external gear 24a in the circumferential direction. Further an axial thickness of each wedge member 26 and 27 is larger than an axial thickness of the boss portion 21a (the internal gear 22a) and an axial thickness of the bush 25 (the external gear 24a). In other words, the wedge member 26 includes a retaining portion 26a and a pressed portion 26b that are integrally formed with each other while the wedge member 27 includes a retaining portion 27a and a pressed portion 27b that are integrally formed with each other. The retaining portions 26a and 27a are provided in a position axially overlapping the internal gear 22a and the external gear 24a. Further, the retaining portions 26a and 27a retain the engagement position between the internal gear 22a and the external gear 24a. The pressed portions 26b and 27b are axially offset from the retaining portions 26a and 27a (so as to be positioned at the further exterior side of the seat 1 in the width direction than the retaining portions 26a and 27a). Further, respective corner portions of ends of the wedge members 26 and 27, which are provided in the vicinity of the engagement position in the circumferential direction, are notched as to configure lock portions 26c and 27c.

The wedge members 26 and 27 are biased by a retaining spring 28 so that a space between the wedge members 26 and 27 is expanded. That is, the wedge members 26 and 27 are biased by the retaining spring 28 so that eccentricity between the internal gear 22a and the external gear 24a increases. In particular, the retaining spring 28 is formed into an omega-shape while including an arch-shaped spring portion 28a and a pair of ends 28b. The spring portion 28a of the retaining spring 28 is attached around outer circumferential surfaces of the pressed portions 26b and 27b and an outer circumferential surface of a cam portion 31c of the driving cam 31 that will be described below. The ends 28b of the retaining spring 28 are bent from both ends of the spring portion 28a and positioned so as to extend in parallel with the central axes O1 and 02. The ends 28b are locked to the lock portions 26c and 27c, respectively; thereby, the wedge members 26 and 27 are biased by the retaining spring 28 to increase the eccentricity between the internal gear 22a and the external gear 24a. Thus, the wedge members 26 and 27 retain the engagement position between the internal gear 22a and the external gear 24a. That is, the seat reclining apparatus 4 is configured so that a rotational angle of the upper plate 23 relative to the lower plate 21 is retained by a frictional force of the pair of wedge members 26 and 27 and a biasing force of the retaining spring 28.

A fixing bush 29 is fixed in the center of the lower plate 21. The fixing bush 29 includes a cylindrical portion 29a and a flange 29b that are formed integrally with each other. The cylindrical portion 29a has approximately the same external diameter as an internal diameter of the boss portion 21a. The flange 29b expanding radially outwardly is in contact with an inner surface of the lower plate 21, which faces the flange 29b. The cylindrical portion 29a is welded or press-fitted to the boss portion 21a to thereby fix the fixing bush 29 to the lower plate 21. Further, an end portion of the cylindrical portion 29a protrudes toward the further exterior side of the seat 1 than the boss portion 21a so as to configure a protruding column portion 30. The protruding column portion 30 is provided in a position axially overlapping the pressed portions 26b and 27b of the wedge members 26 and 27 (see Fig. 4). Furthermore, the connecting shaft 5 is movably inserted into the fixing bush 29.

The driving cam 31 formed, for example, by resin is fitted to an end portion of the connecting shaft 5 movably inserted into the fixing bush 29. The driving cam 31 includes a flange 31a extending radially outwardly and a bearing portion 31b formed into a cylindrical shape. The flange 31a is in contact with an end face of the protruding column portion 30. The bearing portion 31b has approximately the same external diameter as an internal diameter of the cylindrical portion 29a. An axial length of the bearing portion 31b is longer than an axial length of the fixing bush 29. A retaining ring 32 formed by a metallic plate is attached to an end portion of the bearing portion 31b, which is located at a first end portion of the driving cam 31. The end portion of the bearing portion 31b is inserted into the fixing bush 29 so as to penetrate theretrough. The driving cam 31 supports the fixing bush 29 (the lower plate 21) to be rotatable in such a way that the fixing bush 29 is axially positioned between the flange 31a and the retaining ring 32. Further, a second end portion of the driving cam 31, which is located at the further exterior side of the seat 1 than the first end portion, protrudes further toward the exterior side than the flange 31a. The second end portion of the driving cam 31 is inserted into a cover 40 formed, for example, by a metallic plate. A retaining ring 41 formed by a metallic plate is attached to the second end portion of the driving cam 31, which penetrates through the cover 40. That is, the driving cam 31 is axially positioned between both of the retaining rings 32 and 41.

The cam portion 31c having a circular arc shape is integrally formed at the driving cam 31. The cam portion 31c axially protrudes from an outer circumferential surface of the flange 31a at an angular position circumferentially opposite to the engagement position between the internal gear 22a and the external gear 24a while contacting the bush 25 or being positioned closer to the bush 25. An external diameter of the cam 31c is smaller than the internal diameter of the bush 25 and larger than the external diameter of the boss portion 21a (see Fig. 4). When the internal gear 22a and the external gear 24a are in the engagement position as illustrated in Fig. 3, the cam portion 31c is arranged at a predetermined distance between the pressed portions 26b and 27b of the wedge members 26 and 27 at the aforementioned angular position. The pressed portions 26b and 27b are circumferentially adjacent to each other. Further, the cam portion 31c is provided in a position axially overlapping the pressed portions 26b and 27b and the protruding column portion 30 (see Fig. 4). Furthermore, an accommodating space S having an approximately annular shape is formed between inner circumferential surfaces of the pressed portions 26b and 27b and an outer circumferential surface of the protruding column 30.

A coil portion 33a of a torsion spring 33 is attached around the outer circumferential surface of the protruding column portion 30 so as to be accommodated in the accommodating space S. Both ends 33b of the torsion spring 33 extending in a radially outward direction of the coil portion 33a are arranged between the cam portion 31c and each of the pressed portions 26b and 27b. Each of the ends 33b of the torsion spring 33 is circumferentially adjacent to the cam portion 31c and each of the pressed portions 26b and 27b. The torsion spring 33 is elastically deformed so that a diameter of the coil portion 33a is expanded when each pressed portion 26b, 27b is circumferentially pressed by the cam portion 31c via the end 33b. That is, the torsion spring 33 is elastically deformed so that a frictional engagement between the coil portion 33a and the protruding column portion 30 decreases. Meanwhile, the torsion spring 33 is elastically deformed so that the diameter of the coil portion 33a is reduced when the end 33b is circumferentially pressed by each pressed portion 26b, 27b. That is, the torsion spring 33 is elastically deformed so that the frictional engagement between the coil portion 33a and the protruding column 30 increases.

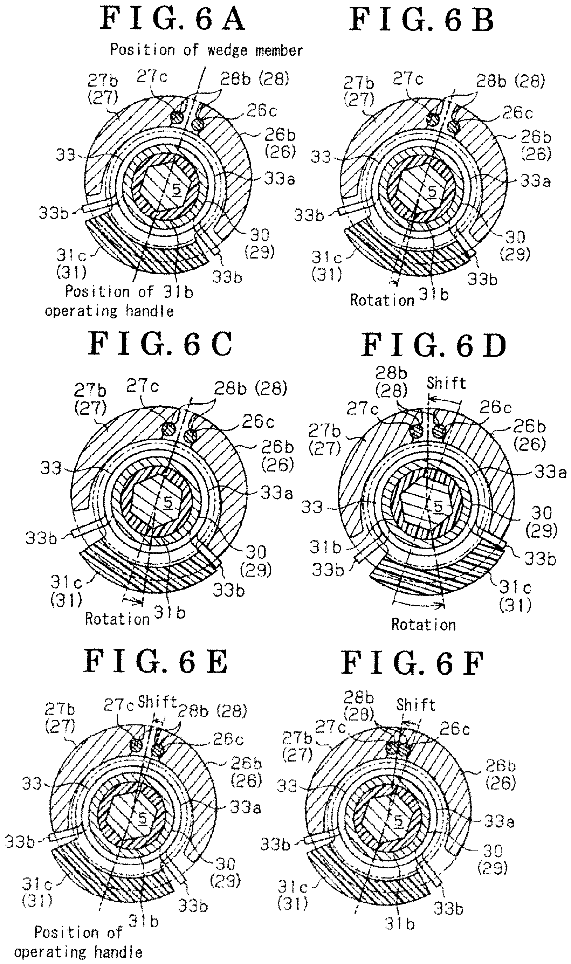

Here, an operation of the seat reclining apparatus 4 according to the first embodiment will be explained as follows with reference to Figs. 6A to 6F. An initial state of the seat reclining apparatus 4 is shown in Fig. 6A. For example, when the driving cam 31 is rotated in conjunction with a rotating operation of the operating handle 6 in a counterclockwise direction shown in Fig. 6A under the aforementioned initial state, the cam portion 31c of the driving cam 31 makes contact with one of the ends 33b facing the cam portion 31c in the counterclockwise rotating direction of the driving cam 31 (see Fig. 6B). Then, the one of the ends 33b is pressed by the cam portion 31c of the driving cam 31 until being brought into contact with the pressed portion 26b of the wedge member 26. Accordingly, the torsion spring 33 is elastically deformed to increase the diameter of the coil portion 33a (so as to be unstrained) (see Fig. 6C). Afterward, the pressed portion 26b of the wedge member 26 is pressed by the cam portion 31c of the driving cam 31 via the one of the ends 33b. Thus, the wedge member 26 is rotated along with the torsion spring 33 in the counterclockwise rotating direction of the driving cam 31 while elastically deforming the retaining spring 28 (see Fig. 6D). As a result, the engagement position between the internal gear 22a and the external gear 24a shifts in the counterclockwise rotating direction to thereby rotate the upper plate 23 relative to the lower plate 21 in the same direction in a manner described above; therefore, a tilt angle of the seat back 3 relative to the seat cushion 2 is continuously adjusted. That is, since the torsion spring 33 is elastically deformed so that the frictional engagement between the coil portion 33a and the protruding column portion 30 decreases, the rotation of the wedge member 26 along with the torsion spring 33 is not inhibited.

Meanwhile, for example, when an external load such as a load or vibrations is applied from a rearward direction of the seat back 3 thereto under the initial state shown in Fig. 6A, a force larger than the biasing force of the retaining spring 28 and deteriorating a wedge effect of the wedge member 26 acts thereon; therefore, the wedge member 26 is rotated. A frictional force on the inner and outer circumferential surfaces of the wedge members 26 is large enough to maintain the wedge effect of the wedge member 26 in a usual condition. However, a friction angle of the wedge member 26 is reduced to be smaller than a wedge angle of the wedge member 26 because of the vibrations or the like; thereby, the force deteriorating the wedge effect acts on the wedge member 26 to release the wedge member 26 against the biasing force of the retaining spring 28. As described above, for example, when the external load is applied to the wedge member 26, the wedge member 27 that is ahead of the wedge member 26 in the counterclockwise rotating direction shown in Fig. 6D is rotated via the retaining spring 28. At this time, the pressed portion 27b of the wedge member 27 makes contact with the other of the ends 33b facing the cam portion 31c in the counterclockwise rotating direction (see Fig. 6E). The wedge member 27 may not be further rotated along with the wedge member 26 under a condition shown in Fig. 6E because the counterclockwise rotating direction is equal to a direction in which the diameter of the coil portion 33a of the torsion spring 33 is reduced (direction in which the coil portion 33a is wound around the protruding column portion 30 to strengthen the frictional engagement therebetween). Accordingly, when only the wedge member 26 is further rotated under the condition where the rotation of the wedge member 27 is restricted, the wedge member 26 presses the retaining spring 28 to be shrunk, therefore being brought into contact with the wedge member 27 (see Fig. 6F). Consequently, the wedge member 26 is prevented from being further rotated. Thus, the frictional engagement between the coil portion 33a and the protruding column portion 30 serves as a braking force to prevent the upper plate 23 from rotating relative to the lower plate 21.

A second embodiment of a seat reclining apparatus 50 will be described with reference to illustrations of drawings as follows. The seat reclining apparatus 50 according to the second embodiment is different from the seat reclining apparatus 4 according to the first embodiment only in that an intermediate member is provided between the torsion spring 33 and the retaining spring 28. The intermediate member transmits a pressing force between the ends 33b of the torsion spring 33 and pressed portions 51b and 52b of wedge members 51 and 52. The ends 33b of the torsion spring 33 are circumferentially adjacent to the respective pressed portions 51b and 52b. Similar configurations of the second embodiment to configurations of the first embodiment will not be explained hereinafter.

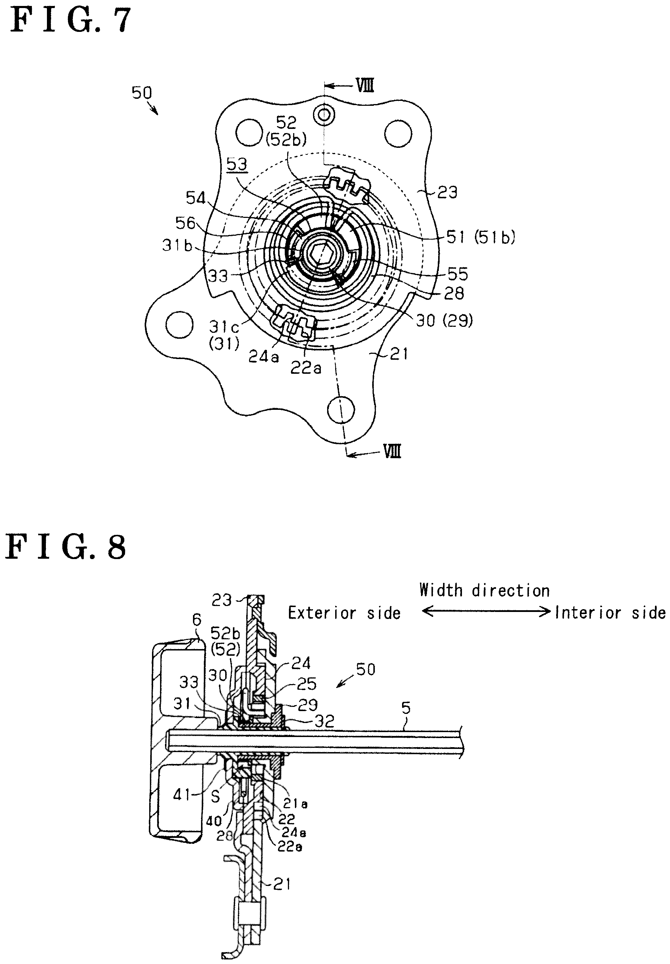

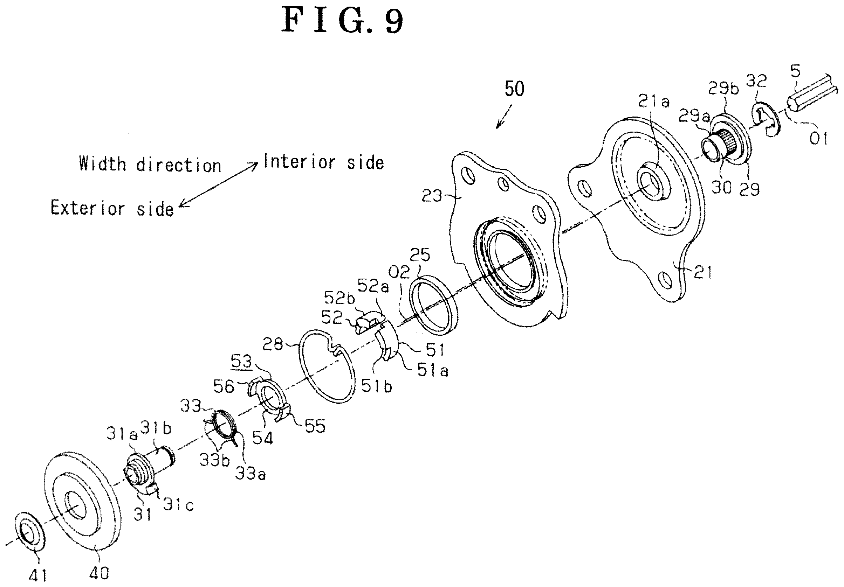

Fig. 7 is a lateral view of the seat reclining apparatus 50. Fig. 8 is a cross-sectional view taken along the line VIII-VIII of Fig. 7. Fig. 9 is an exploded perspective view of the seat reclining apparatus 50.

As illustrated in Figs. 7 to 9, the accommodating space having the approximately annular shape between the inner circumferential surface of the bush 25 and the outer circumferential surface of the boss portion 21a is formed due to the eccentric engagement between the internal gear 22a and the external gear 24a. A pair of wedge members 51 and 52 is accommodated in the accommodating space. The pair of wedge members 51 and 52 is formed by two symmetric portions circumferentially divided at the engagement position between the internal gear 22a and the external gear 24a and at the angular position that is circumferentially opposite from the engagement position. The wedge members 51 and 52 are formed into approximately symmetric arc shapes conforming to the shape of the accommodating space formed between the inner circumferential surface of the bush 25 and the outer circumferential surface of the boss portion 21a. A radial thickness of each of the wedge members 51 and 52 increases toward an upper end of each wedge member 51, 52, which is located circumferentially in the vicinity of the engagement position between the internal gear 22a and the external gear 24a. The wedge member 51 includes a retaining portion 51a and the pressed portion 51b that are integrally formed with each other while the wedge member 52 includes a retaining portion 52a and the pressed portion 52b that are integrally formed with each other. Each of the retaining portions 51a and 52a is provided in a position axially overlapping the internal gear 22a and the external gear 24a to thereby retain the engagement position between the internal gear 22a and the external gear 24a. The pressed portions 51b and 52b are axially offset from the upper ends of the retaining portions 51a and 52a located in the vicinity of the engagement position so as to be positioned at the further exterior side of the seat 1 in the width direction than the retaining portions 51a and 52a. That is, a space between the pressed portions 51b and 52b at the angular position that is circumferentially opposite from engagement position is larger than a space between the retaining portions 51a and 52a. Further, the wedge members 51 and 52 are biased by the retaining spring 28 so that a space between the wedge members 51 and 52 is expanded. That is, the wedge members 51 and 52 are biased by the retaining spring 28 so that the eccentricity between the internal gear 22a and the external gear 24a increases. In a similar way as in the first embodiment, the rotation angle of the upper plate 23 relative to the lower plate 21 is retained by a frictional force of the pair of wedge members 51 and 52 and by the biasing force of the retaining spring 28 in the seat reclining apparatus 50 according to the second embodiment.

An intermediate cam 53 formed in a shape resembling a butterfly and serving as the intermediate member is rotatably supported by the cylindrical portion 29a of the fixing bush 29. The intermediate cam 53 includes an annular ring portion 54 and a pair of cam sections 55 and 56 serving as intermediate transmitting portions. The ring portion 54 has an inner diameter that is approximately the same size as an external diameter of the cylindrical portion 29a and an external diameter that is slightly smaller than the external diameter of the boss portion 21a. The cam sections 55 and 56 axially protrude from angular positions at which the cam sections 55 and 56 face each other on the ring portion 54, toward the exterior side of the seat 1. The intermediate cam 53 is supported by the cylindrical portion 29a in such a way that the ring portion 54 is in contact with an end face of the boss portion 21a. The cam sections 55 and 56 are provided in a position axially overlapping the pressed portions 51b and 52b of the wedge members 51 and 52 (and the cam portion 31c of the driving cam 31). The cam sections 55 and 56 are arranged at a predetermined space between the respective pressed portions 51b and 52b and the respective ends 33b and are in contact with the flange 31a of the driving cam 31. The pressed portions 51b and 52b are circumferentially adjacent to the ends 33b of the torsion spring 33, respectively. That is, the intermediate cam 53 is rotatably supported by the fixing bush 29 so as to be axially positioned between the boss portion 21a and the flange 31a.

Additionally, according to the second embodiment, the torsion spring 33 is configured so that the ends 33b are circumferentially pressed by the respective pressed portions 51b and 52b via the respective cam sections 55 and 56 so that the diameter of the coil portion 33a is reduced, i.e. the torsion spring 33 is elastically deformed so that the frictional engagement between the coil portion 33a and the protruding column portion 30 strengthens.

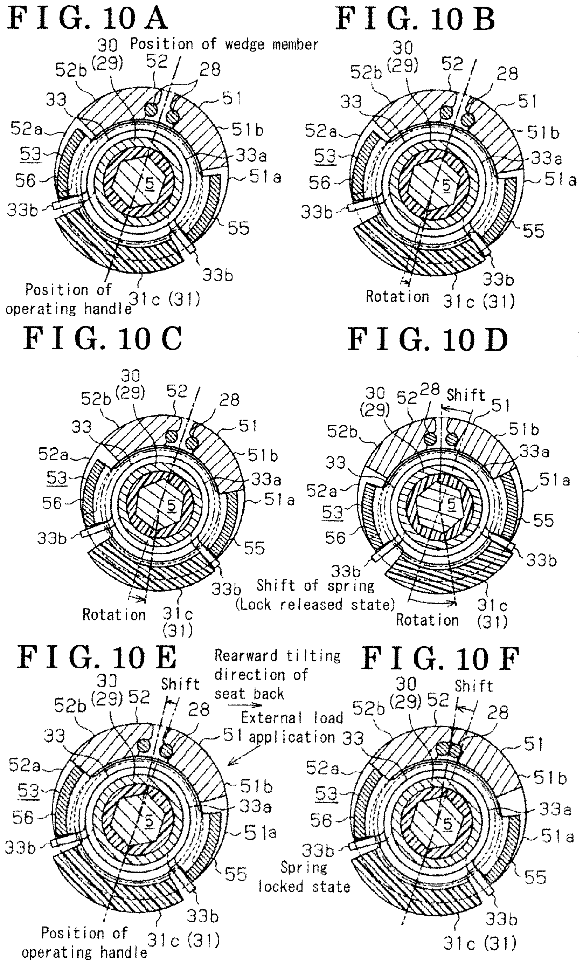

An operation of the seat reclining apparatus 50 according to the second embodiment will be described as follows with reference to Figs. 10A to 10F. An initial state of the seat reclining apparatus 50 is shown in Fig. 10A. For example, when the driving cam 31 is rotated in conjunction with the rotating operation of the operating handle 6 in a counterclockwise direction shown in Fig. 10A under the aforementioned initial state, the cam portion 31c of the driving cam 31 makes contact with one of the ends 33b facing the cam portion 31c in the counterclockwise rotating direction of the driving cam 31 (see Fig. 10B). Then, the cam section 55 of the intermediate cam 53 is pressed by the cam portion 31c of the driving cam 31 via the one of the ends 33b until being in contact with the pressed portion 51b of the wedge member 51. Accordingly, the torsion spring 33 is elastically deformed to increase the diameter of the coil portion 33a (so as to be unstrained) (see Fig. 10C). Afterward, the pressed portion 51b of the wedge member 51 is pressed by the cam portion 31c of the driving cam 31 via the one of the ends 33b and the cam section 55. Thus, the wedge member 51 rotates along with the torsion spring 33 in the counterclockwise rotating direction of the driving cam 31 while elastically deforming the retaining spring 28 (see Fig. 10D). As a result, a tilt angle of the seat back 3 relative to the seat cushion 2 is continuously adjusted as described above. In this case, since the torsion spring 33 is elastically deformed so that the frictional engagement between the coil portion 33a and the protruding column portion 30 decreases, the rotation of the wedge member 51 along with the torsion spring 33 is not inhibited.

Meanwhile, for example, an external load is applied to the wedge member 51 under the initial state shown in Fig. 10A, therefore rotating the wedge member 52 that is ahead of the wedge member 51 in the counterclockwise rotating direction shown in Fig. 10D via the retaining spring 28. At this time, the pressed portion 52b of the wedge member 52 makes contact with the other of the ends 33b facing the cam section 56 in the counterclockwise rotating direction (see Fig. 10E). The wedge member 52 may not further rotate along with the wedge member 26 under a condition shown in Fig. 10E because the counterclockwise rotating direction is equal to the direction in which the diameter of the coil portion 33a of the torsion spring 33 is reduced (direction in which the coil portion 33a is wound around the protruding column portion 30 to strengthen the frictional engagement therebetween). Accordingly, when only the wedge member 51 further rotates under the condition where the rotation of the wedge member 52 is restricted, the wedge member 51 presses the retaining spring 28 to be shrunk, therefore being brought into contact with the wedge member 52 (see Fig. 10F) and being prevented from further rotating. Thus, the frictional engagement between the coil portion 33a and the protruding column portion 30 serves as the braking force to prevent the upper plate 23 from rotating relative to the lower plate 21.

In addition, the seat reclining apparatus 4, 50 according to the first and second embodiments may be modified as follows. The boss portion 21a may be excluded. Alternatively, the fixing bush 29 may be inserted into the lower plate 21 (recessed portion 22) so as to be fixed thereto.

According to the first and second embodiment, the protruding column portion 30 is formed at the end portion of the fixing bush 29 (cylindrical portion 29a).

According to the first and second embodiments, the number of teeth of the internal gear 22 may be increased by two or more, which is more than the number of teeth of the external gear 24a. In addition, according to the first and second embodiments, the lower plate 21 and the upper plate 23 are arranged at the seat cushion 2 and the seat back 3, respectively. Alternatively, the lower plate 21 may be arranged at the seat back 3 while the upper plate 23 may be arranged at the seat cushion 2.
cushion 2 and the seat back 3, respectively. Alternatively, the lower plate 21 may be arranged at the seat back 3 while the upper plate 23 may be arranged at the seat cushion 2.

## Claims

1. A seat reclining apparatus (4, 50) for a vehicle, comprising:
a first plate (21) adapted to be attached to one of a seat cushion (2) and a seat back (3) and including an internal gear (22a);
a second plate (23) adapted to be attached to the other of the seat cushion (2) and the seat back (3) and including an external gear (24a) having fewer teeth than the internal gear (22a) and engaging with the internal gear (22a); and **characterized in that** it also comprises
a pair of wedge members (26; 27, 51; 52) arranged between the first plate (21) and the second plate (23), biased in a direction in which eccentricity between the internal gear (22a) and the external gear (24a) increases, and retaining an engagement position between the internal gear (22a) and the external gear (24a); and
a driving cam (31) arranged to be rotatable relatively to the first plate (21), including a cam portion (31c), and to shift the engagement position between the internal gear (22a) and the external gear (24a) by the cam portion (31c) pressing the pair of wedge members (26; 27, 51; 52) so that the wedge members (26; 27, 51; 52) are integrally rotated with the cam portion (31c) when the driving cam (31) is rotatably operated,
wherein each of the wedge members (26; 27, 51; 52) includes a retaining portion (26a; 27a, 51a; 52a) and a pressed portion (26b; 27b, 51b; 52b) that are integrally formed with each other, the retaining portion (26a; 27a, 51a; 52a) being provided in a position axially overlapping the internal gear (22a) and the external gear (24a) and retaining the engagement position between the internal gear (22a) and the external gear (24a), the pressed portion (26b; 27b, 51b; 52b) being axially offset from the retaining portion (26a; 27a, 51a; 52a) and pressed by the cam portion (31c), and
the seat reclining apparatus (4, 50) further comprising:
a protruding column portion (30) provided in the center of the first plate (21) in a protruding manner and positioned coaxially with the internal gear (22a); and
a torsion spring (33) including a coil portion (33a) disposed in a position axially overlapping the pressed portions (26b; 27b, 51b; 52b) and attached around an outer circumferential surface of the protruding column portion (30), the torsion spring (33) including both ends (33b), each of the ends (33b) being circumferentially adjacent to the cam portion (31c) and the pressed portion (26b; 27b, 51b; 52b) and disposed therebetween, the torsion spring (33) being elastically deformed to reduce a frictional engagement between the coil portion (33a) and the protruding column portion (30) when the cam portion (31c) presses the pressed portion (26b; 27b, 51b; 52b) via the end (33b), the torsion spring (33) being elastically deformed to increase the frictional engagement between the coil portion (33a) and the protruding column portion (30) when the pressed portion (26b; 27b, 51b; 52b) presses the end (33b).

2. The seat reclining apparatus (50) according to Claim 1, further comprising an intermediate member (53) including a pair of intermediate transmitting portions (55, 56), each of the intermediate transmitting portions (55, 56) being circumferentially adjacent to the end (33b) and the pressed portion (51b, 52b) and disposed therebetween, the intermediate transmitting portion (55, 56) receiving a pressing force of the cam portion (31c) via the end (33b) and transmitting the pressing force to the pressed portion (51b, 52b), the intermediate transmitting portion (55, 56) receiving a pressing force of the pressed portion (51b, 52b) and transmitting the pressing force to the end (33b).

3. The seat reclining apparatus according (4, 50) to Claim 1 or 2, wherein the pair of wedge members (26; 27, 51; 52) is biased by a retaining spring (28) so that the eccentricity between the internal gear (22a) and the external gear (24a) increases, the retaining spring (28) being arranged around an outer circumferential surface of the cam portion (31c) and outer circumferential surfaces of the pressed portions (26b; 27b, 51b; 52b) and including both ends (28b) that extend in parallel with axes (O1, O2) of the internal gear (22a) and the external gear (24a) and that are locked to the wedge members (26; 27, 51; 52), respectively.

4. The seat reclining apparatus (4, 50) according to any one of Claims 1 to 3, wherein the ends (33b) of the torsion spring (33) extend in a radially outward direction of the coil portion (33a).

## Patentansprüche

1. Sitzneigungsverstellvorrichtung (4, 50) für ein Fahrzeug, umfassend:
eine erste Platte (21), die geeignet ist, an einem Sitzkissen (2) oder einer Sitzlehne (3) angebracht zu werden, und die eine Innenverzahnung (22a) beinhaltet,
eine zweite Platte (23), die geeignet ist, an dem anderen von dem Sitzkissen (2) und der Sitzlehne (3) angebracht zu werden, und die eine Außenverzahnung (24a) beinhaltet, die weniger Zähnen als die Innenverzahnung (22a) hat und mit der Innenverzahnung (22a) in Eingriff steht, und **dadurch gekennzeichnet, dass** sie ferner umfasst:
ein Paar Keilelemente (26; 27, 51; 52), die zwischen der ersten Platte (21) und der zweiten Platte (23) angeordnet und in einer Richtung vorgespannt sind, in der die Exzentrizität zwischen der Innenverzahnung (22a) und der Außenverzahnung (24a) zunimmt, und die eine Eingriffsposition zwischen der Innenverzahnung (22a) und der Außenverzahnung (24a) halten, und
einen Antriebsnocken (31), der angeordnet ist, um relativ zu der ersten Platte (21) einschließlich eines Nockenabschnitts (31c) drehbar zu sein und um die Eingriffsposition zwischen der Innenverzahnung (22a) und der Außenverzahnung (24a) dadurch zu verschieben, dass der Nockenabschnitt (31c) das Paar Keilelemente (26; 27, 51; 52) drückt, so dass die Keilelemente (26; 27, 51; 52) integral mit dem Nockenabschnitt (31c) gedreht werden, wenn der Antriebsnocken (31) drehbar betrieben wird,
wobei jedes der Keilelemente (26; 27, 51; 52) einen Halteabschnitt (26a; 27a, 51a; 52a) und einen gedrückten Abschnitt (26b; 27b, 51b; 52b) beinhaltet, die einstückig miteinander ausgebildet sind, wobei der Halteabschnitt (26a; 27a, 51a; 52a) in einer Position bereitgestellt ist, welche die Innenverzahnung (22a) und die Außenverzahnung (24a) axial überlappt, und die Eingriffsposition zwischen der Innenverzahnung (22a) und der Außenverzahnung (24a) hält, wobei der gedrückte Abschnitt (26b; 27b, 51b; 52b) von dem Halteabschnitt (26a; 27a, 51a; 52a) axial versetzt ist und durch den Nockenabschnitt (31c) gedrückt wird, und
wobei die Sitzneigungsverstellvorrichtung (4, 50) ferner umfasst:
einen vorstehenden Säulenabschnitt (30), der in der Mitte der ersten Platte (21) auf vorstehende Weise bereitgestellt und koaxial mit der Innenverzahnung (22a) positioniert ist, und
eine Torsionsfeder (33), die einen Spulenabschnitt (33a) beinhaltet, der in einer Position angeordnet ist, welche die gedrückten Abschnitte (26b; 27b, 51b; 52b) axial überlappt und um eine Außenumfangsfläche des vorstehenden Säulenabschnitts (30) herum angebracht ist, wobei die Torsionsfeder (33) beide Enden (33b) beinhaltet, wobei jedes der Enden (33b) in Umfangsrichtung an den Nockenabschnitt (31c) und den gedrückten Abschnitt (26b; 27b, 51b; 52b) angrenzt und dazwischen angeordnet ist, wobei die Torsionsfeder (33) elastisch verformt wird, um einen Reibungseingriff zwischen dem Spulenabschnitt (33a) und dem vorstehenden Säulenabschnitt (30) zu verringern, wenn der Nockenabschnitt (31c) den gedrückten Abschnitt (26b; 27b, 51b; 52b) über das Ende (33b) drückt, wobei die Torsionsfeder (33) elastisch verformt wird, um den Reibungseingriff zwischen dem Spulenabschnitt (33a) und dem vorstehenden Säulenabschnitt (30) zu erhöhen, wenn der gedrückte Abschnitt (26b; 27b, 51b; 52b) auf das Ende (33b) drückt.

2. Sitzneigungsverstellvorrichtung (50) nach Anspruch 1, ferner umfassend ein Zwischenelement (53), das ein Paar Zwischenübertragungsabschnitte (55, 56) beinhaltet, wobei jeder der Zwischenübertragungsabschnitte (55, 56) in Umfangsrichtung an das Ende (33b) und den gedrückten Abschnitt (51b, 52b) angrenzt und dazwischen angeordnet ist, wobei der Zwischenübertragungsabschnitt (55, 56) eine Druckkraft des Nockenabschnitts (31c) über das Ende (33b) aufnimmt und die Druckkraft auf den gedrückten Abschnitt (51b, 52b) überträgt, wobei der Zwischenübertragungsabschnitt (55, 56) eine Druckkraft des gedrückten Abschnitts (51b, 52b) aufnimmt und die Druckkraft auf das Ende (33b) überträgt.

3. Sitzneigungsverstellvorrichtung (4, 50) nach Anspruch 1 oder 2, wobei das Paar Keilelemente (26; 27, 51; 52) durch eine Haltefeder (28) vorgespannt ist, so dass die Exzentrizität zwischen der Innenverzahnung (22a) und der Außenverzahnung (24a) zunimmt, wobei die Haltefeder (28) um eine Außenumfangsfläche des Nockenabschnitts (31c) und Außenumfangsflächen der gedrückten Abschnitte (26b; 27b, 51b; 52b) herum angeordnet ist und beide Enden (28b) beinhaltet, die sich parallel zu Achsen (O1, O2) der Innenverzahnung (22a) und der Außenverzahnung (24a) erstrecken bzw. die mit den Keilelementen (26; 27, 51; 52) verriegelt sind.

4. Sitzneigungsverstellvorrichtung (4, 50) nach einem der Ansprüche 1 bis 3, wobei sich die Enden (33b) der Torsionsfeder (33) in einer radial nach außen gerichteten Richtung des Spulenabschnitts (33a) erstrecken.

## Revendications

1. Appareil d'inclinaison de siège (4, 50) pour un véhicule, comprenant :
une première plaque (21) adaptée pour être fixée à l'un parmi un coussin de siège (2) et un dossier (3) et comprenant un engrenage interne (22a) ;
une seconde plaque (23) adaptée pour être fixée à l'autre parmi le coussin de siège (2) et le dossier (3) et comprenant un engrenage externe (24a) ayant moins de dents que l'engrenage interne (22a) et se mettant en prise avec l'engrenage interne (22a) ; et **caractérisé en ce qu'**il comprend également :
une paire d'éléments de cale (26 ; 27, 51 ; 52) agencés entre la première plaque (21) et la seconde plaque (23), sollicités dans une direction dans laquelle l'excentricité entre l'engrenage interne (22a) et l'engrenage externe (24a) augmente, et conservant une position de mise en prise entre l'engrenage interne (22a) et l'engrenage externe (24a) ; et
une came d'entraînement (31) agencée pour pouvoir tourner par rapport à la première plaque (21), comprenant une partie de came (31c) et pour déplacer la position de mise en prise entre l'engrenage interne (22a) et l'engrenage externe (24a) par la partie de came (31c) comprimant la paire d'éléments de cale (26 ; 27, 51 ; 52) de sorte que les éléments de cale (26 ; 27, 51 ; 52) sont entraînés de manière solidaire avec la partie de came (31c) lorsque la came d'entraînement (31) est actionnée en rotation,
dans lequel chacun des éléments de cale (26 ; 27, 51 ; 52) comprend une partie de retenue (26a ; 27a, 51a ; 52a) et une partie comprimée (26b ; 27b, 51b ; 52b) qui sont formées de manière solidaire l'une avec l'autre, la partie de retenue (26a ; 27a, 51a ; 52a) étant prévue dans une position recouvrant axialement l'engrenage interne (22a) et l'engrenage externe (24a) et conservant la position de mise en prise entre l'engrenage interne (22a) et l'engrenage externe (24a), la partie comprimée (26b ; 27b, 51b ; 52b) étant axialement décalée de la partie de retenue (26a ; 27a, 51a ; 52a) et comprimée par la partie de came (31c), et
l'appareil d'inclinaison de siège (4, 50) comprenant en outre :
une partie de colonne en saillie (30) prévue dans le centre de la première plaque (21) en saillie et positionnée de manière coaxiale avec l'engrenage interne (22a) ; et
un ressort de torsion (33) comprenant une partie hélicoïdale (33a) disposée dans une position recouvrant axialement les parties comprimées (26b ; 27b, 51b ; 52b) et fixée autour d'une surface circonférentielle externe de la partie de colonne en saillie (30), le ressort de torsion (33) comprenant deux extrémités (33b), chacune des extrémités (33b) étant circonférentiellement adjacente à la partie de came (31c) et à la partie comprimée (26b ; 27b, 51b ; 52b) et disposée entre elles, le ressort de torsion (33) étant élastiquement déformé pour réduire une mise en prise de friction entre la partie hélicoïdale (33a) et la partie de colonne en saillie (30) lorsque la partie de came (31c) comprime la partie comprimée (26b ; 27b, 51b ; 52b) via l'extrémité (33b), le ressort de torsion (33) étant élastiquement déformé pour augmenter la mise en prise de friction entre la partie hélicoïdale (33a) et la partie de colonne en saillie (30) lorsque la partie comprimée (26b ; 27b, 51b ; 52b) comprime l'extrémité (33b).

2. Appareil d'inclinaison de siège (50) selon la revendication 1, comprenant en outre un élément intermédiaire (53) comprenant une paire de parties de transmission intermédiaires (55, 56), chacune des parties de transmission intermédiaires (55, 56) étant circonférentiellement adjacente à l'extrémité (33b) et à la partie comprimée (51b, 52b) et disposée entre elles, la partie de transmission intermédiaire (55, 56) recevant une force de pression de la partie de came (31c) via l'extrémité (33b) et transmettant la force de pression à la partie comprimée (51b, 52b), la partie de transmission intermédiaire (55, 56) recevant une force de pression de la partie comprimée (51b, 52b) et transmettant la force de pression à l'extrémité (33b).

3. Appareil d'inclinaison de siège (4, 50) selon la revendication 1 ou 2, dans lequel la paire d'éléments de cale (26 ; 27, 51 ; 52) est sollicitée par un ressort de retenue (28) de sorte que l'excentricité entre l'engrenage interne (22a) et l'engrenage externe (24a) augmente, le ressort de retenue (28) étant agencé autour d'une surface circonférentielle externe de la partie de came (31c) et les surfaces circonférentielles externes des parties comprimées (26b ; 27b, 51b ; 52b) et comprenant les deux extrémités (28b) qui s'étendent en parallèle avec les axes (O1, O2) de l'engrenage interne (22a) et de l'engrenage externe (24a) et qui sont verrouillées sur les éléments de cale (26 ; 27, 51 ; 52), respectivement.

4. Appareil d'inclinaison de siège (4, 50) selon l'une quelconque des revendications 1 à 3, dans lequel les extrémités (33b) du ressort de torsion (33) s'étendent dans une direction radialement vers l'extérieur de la partie hélicoïdale (33a).
